# EUROPEAN PATENT SPECIFICATION

(11) **EP 3 645 434 B1**
(45) Date of publication and mention of the grant of the patent: **07.06.2023**
(21) Application number: 18746268.4
(22) Date of filing: 14.06.2018
(51) Int. Cl.: B65G 53/40, B65G 53/18

(54) **APPARATUS FOR THE FLUIDIFICATION AND TRANSPORT OF GRANULAR MATERIALS OR POWDERS**
VORRICHTUNG FÜR DIE FLUIDISIERUNG UND DEN TRANSPORT VON KÖRNIGEN MATERIALIEN ODER PULVERN
APPAREIL POUR LA FLUIDIFICATION ET LE TRANSPORT DE MATÉRIAUX GRANULAIRES OU DE POUDRES

(30) Priority: 28.06.2017 IT 201700072484 U
(43) Date of publication of application: 06.05.2020
(73) Proprietor: NTE Holding S.r.l., 20064 Gorgonzola (MI) (IT)
(72) Inventor: NOVELLI, Fabio, 20064 Gorgonzola (Milano) (IT); CONGEDI, Massimo, 20064 Gorgonzola (Milano) (IT)
(74) Representative: Tansini, Elio Fabrizio
(86) International application number: PCT/IB2018/054375
(87) International publication number: WO 2019/003028

(56) References cited:
- EP-A2- 0 526 807
- DE-A1-102015 218 875
- DE-U1- 8 404 709
- US-A- 4 701 080
- US-A1- 2013 330 134

## Description

The present invention relates to an apparatus used in the industrial field for the fluidification and transport of granular materials, in particular powders.

In more detail, the invention relates to an apparatus used to mix the powders in a gaseous fluid, typically air, in order to transport the powders to industrial processing systems included in a respective production process.

As known, the apparatuses for the fluidification and transport of granular materials, in particular powders, comprise a containment compartment for the powders, within which pressurized air is supplied. An aeriform flow is then generated in the compartment, in which the powders are in suspension and homogeneously distributed.

The compartment has at least one outlet opening associated with a communication duct connecting the compartment itself to the production process devices.

The flow leaving the compartment is then passed through the duct to allow the powders to be fed to the respective production process devices.

The containment compartment is defined within a "hopper" structure which substantially has a bottom-up decreasing section.

At the lower portion of the hopper (larger section), there is provided an inlet for supplying pressurized air which extends throughout the cross-sectional width of the hopper itself.

Moreover, the air inlet is equipped with a filter element, made in the form of a cloth, suitable for allowing the passage of the pressurized air within the compartment, avoiding the powder leakage.

In this way, the air is diffused all over the base surface of the hopper and from the bottom upwards within the compartment in order to fluidify the powders, preventing them from aggregating and therefore keeping them homogeneously distributed in suspension.

At the side wall of the hopper, there is provided the outlet opening for the transfer of the fluid flow which is forced through the connection duct suitably associated by means of coupling flanges to the inlet pipes of the aforementioned powder processing systems.

The known apparatus briefly described above, despite of being capable of efficiently fluidifying the powders, still has major drawbacks.

First of all, it should be considered that the apparatus turns out to be not versatile, nor adaptable to the various production needs.

This rigidity is due to the structure of the communication duct for the powder transfer which, having a certain width, is not always compatible with the sizes of the inlet channels of the various apparatuses proposed for the subsequent processing of powders.

Furthermore, the size of the communication duct affects and limits the maximum flow rate of the powders.

Therefore, in order to make the fluidification apparatus capable of being inserted into any type of powder processing plant, adaptation ducts are used to make the communication duct of the fluidification apparatus capable of being coupled to the various powder passage sections. However, it should be considered that the use of such adaptation ducts, including suitable fluid-tight association systems, is expensive and inconvenient during the construction of the entire plant.

A further major drawback of the known apparatuses is the limited possibility of replacing the mechanical parts subject to wear.

In this context, it should be noted that the communication duct is notoriously subject to wear due to the friction of the powders against the inner surfaces of the duct itself. It should be noted, in fact, that at the outlet opening formed in the compartment, *i.e.,* at the entrance of the communication duct, turbulences are formed in the flow, thus leading to an acceleration during transport of the powders which tend to rub on the duct walls, causing its progressive wear.

Moreover, the cloth the filter is composed of, too, needs to be replaced after a determined period of time to ensure the proper filtering function and to remove any solid clusters within the texture of the cloth.

However, the replacement of the cloth is very complex in terms of costs and times which are particularly long, and therefore disadvantageous in terms of production costs.

Furthermore, EP0526807A2 discloses an apparatus according to the preamble of claim 1.

In this context, the technical task underlying the present invention is to propose an apparatus for the fluidification and transport of granular materials, in particular powders, able to overcome the above-mentioned drawbacks of the prior art.

In particular, it is an object of the present invention to provide an apparatus for the fluidification and transport of granular materials, in particular powders, which is versatile and adaptable to any type of production plant, regardless of the size of the various passage ducts for fluid.

A further object of the present invention is to implement an apparatus which is structurally simple and which is capable of replacing quickly and efficiently the mechanical parts subject to wear.

The outlined technical task and the specified object are achieved by any apparatus for the fluidification and transport of granular materials or powders according to claim 1.

Further characteristics and advantages of the present invention will become more apparent from the illustrative, yet non-limiting, description of a preferred, albeit not exclusive, embodiment of an apparatus for the fluidification and transport of granular materials or powders, as illustrated in the appended figures, wherein:
- figure 1 shows a perspective view with some parts of an apparatus for the fluidification and transport of granular materials or powders according to the present invention taken out to illustrate better the others;
- figure 2 shows an enlargement of figure 1 in a respective step of replacing a passage duct for materials;
- figure 3 shows a perspective view of the apparatus in figure 1 in a respective step of replacing a material holding filter;
- figure 4 shows an enlarged and sectional view of a zone of the apparatus according to the present invention and in a respective coupling condition to a production line;
- figures 5a and 5b show a rear and front perspective views of the passage duct for materials, respectively; and
- figure 6 is a perspective view of the material holding filter.

With reference to the accompanying figures, the number 1 generally refers to an apparatus for the fluidification and transport of granular materials or powders according to the present invention.

In particular, the apparatus 1 is used in the treatment plants for powder materials, to make the material itself fluid in a gaseous vehicle, typically pressurized air, and thus allow its transport to respective processing stations.

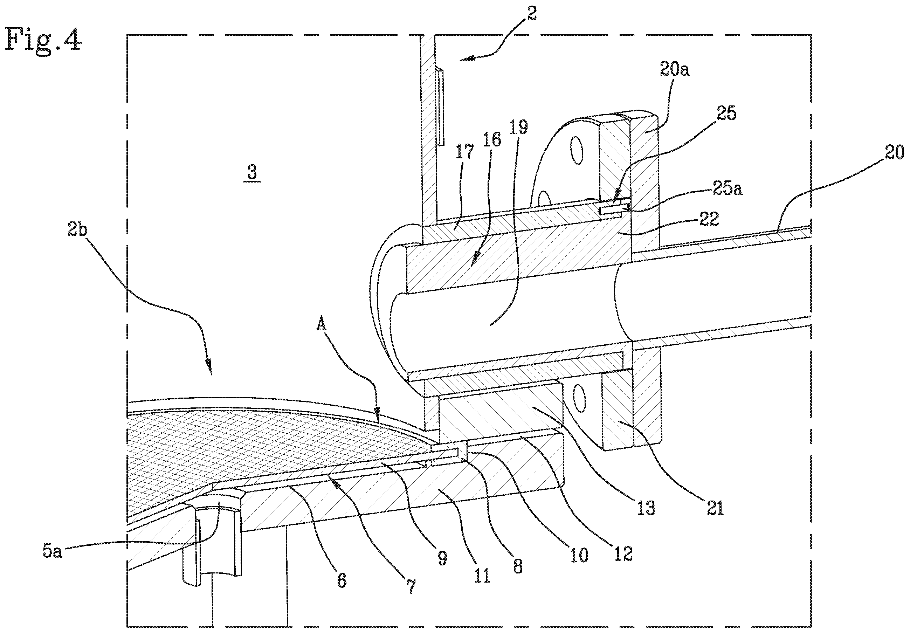

In the remainder of the present discussion, the term "production line" will generally refer to a powder treatment plant, which is not part of the present invention. As partially illustrated in figure 4, the apparatus 1 is associated with the production line in order to convey the flow of air and powder material to the aforementioned processing stations.

In particular, the apparatus 1 comprises a containment body 2 for granular or powder material, internally defining a containment compartment 3.

Preferably, as better illustrated in the accompanying figures, the body 2 is substantially shaped like a hopper equipped with an inlet 2a for supplying powders placed on the top, and an inlet 2b for supplying a pressurized gas placed below. The inlet 2a for supplying powders has a width smaller than the width of the inlet 2b for supplying pressurized gas.

The powders are then introduced into the compartment 3 from above by the action of suitable adjustment systems 4 not described and illustrated in detail since they are of a known type. By contrast, the pressurized gas, preferably air, is fed to the compartment 3 from below through the inlet 2b and by the action of suitable compression systems 5, which are not illustrated and described in detail, too, since they are of a known type.

Feeding pressurized air into the compartment 3 therefore allows to fluidify the powders, keeping them in suspension, and thus generating a flow of air and powder material.

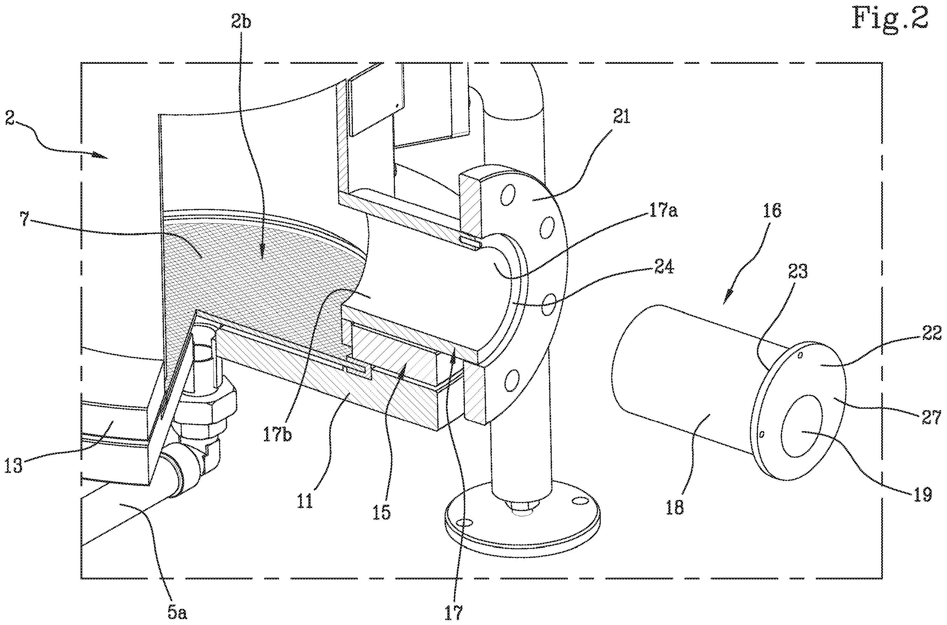

In more detail, with reference to the view in figure 2, the inlet 2b comprises a pipe 5a belonging to the compression systems 5 and suitable for the passage of pressurized gas, and a base surface 6 defining the bottom of the compartment 3.

A filter 7 is arranged on the base surface 6 to allow the passage of the gas within the compartment 3, while preventing the powder material from leaking out through the pipe 5a.

The filter 7 comprises at least a supporting frame 8 which can be removably associated with the aforementioned inlet 2b for supplying gas to provide for the maintenance and replacement operations of the filter itself.

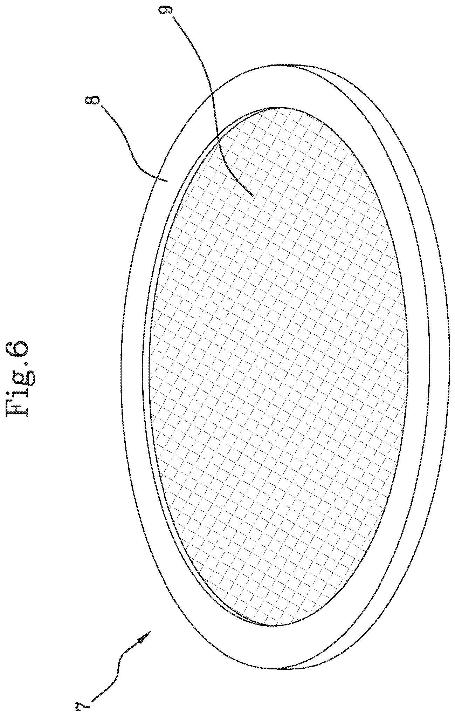

In more detail, as illustrated in figures 2 and 6, the supporting frame 8 has a substantially annular shape, internally defining a seat for housing a mesh element 9 for holding the powders.

The mesh element 9 is made in the form of a cloth and the frame 8 is made of rubber. Advantageously, the mesh element 9 and the frame 8 are integrally made by vulcanization treatment, in which the cloth is anchored to the rubber.

The filter 7 is thereby composed of a single, semi-rigid element, and therefore may be easily manipulated during the removal/replacement operations of the filter 7 itself within the apparatus 1.

In order to allow a quick and easy removal and replacement of the filter 7, an area "A" for housing the filter 7 itself is provided at the surface 6.

In particular, the area "A" is defined by the aforementioned surface 6 and by an annular recess 10 for positioning the frame 8, arranged around said pipe 5a and said surface 6 itself.

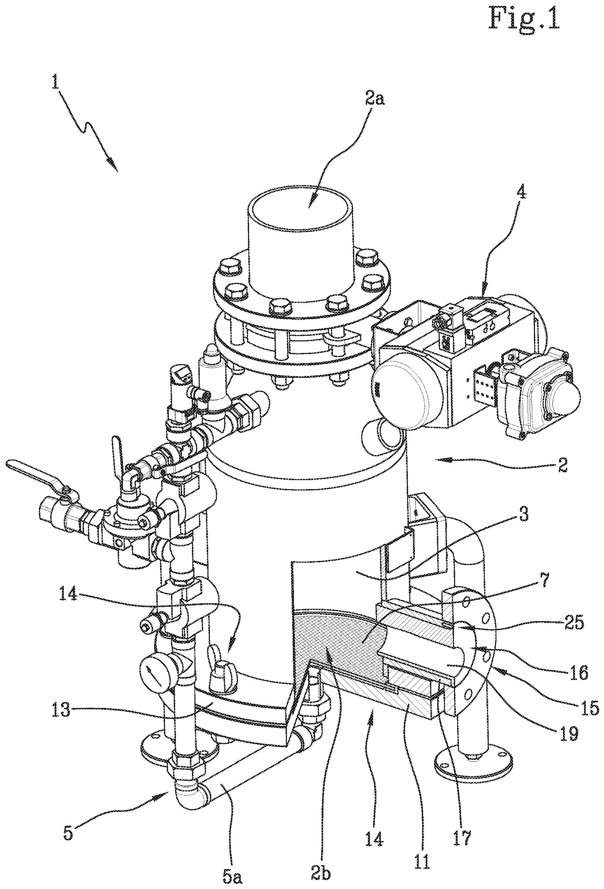

In more detail, as better illustrated in the views in figures 2, 3 and 4, the annular recess 10 and the surface 6 are both formed on a circular flange 11 switchable between an operation condition, in which it is attached to the containment body 2 (figures 1 and 2) to keep the frame 8 in the annular recess 10, and a replacement condition of the filter 7, in which the flange 11 is pulled away from the containment body to allow the removal/positioning of the filter 7 itself.

The annular recess 10 is defined by at least one groove formed at a peripheral area ofthe flange 11.

It should be noted that in the operation condition, in which the flange 11 is coupled to the body 2, the annular recess 10 housing the frame 8 of the filter 7 is brought closer to a contrast surface 12 of a contrast flange 13 constrained to the body 2.

In this situation, the frame 8 of the filter 7 is crushed and held between the recess 10 and the contrast surface 12 of the flange 13.

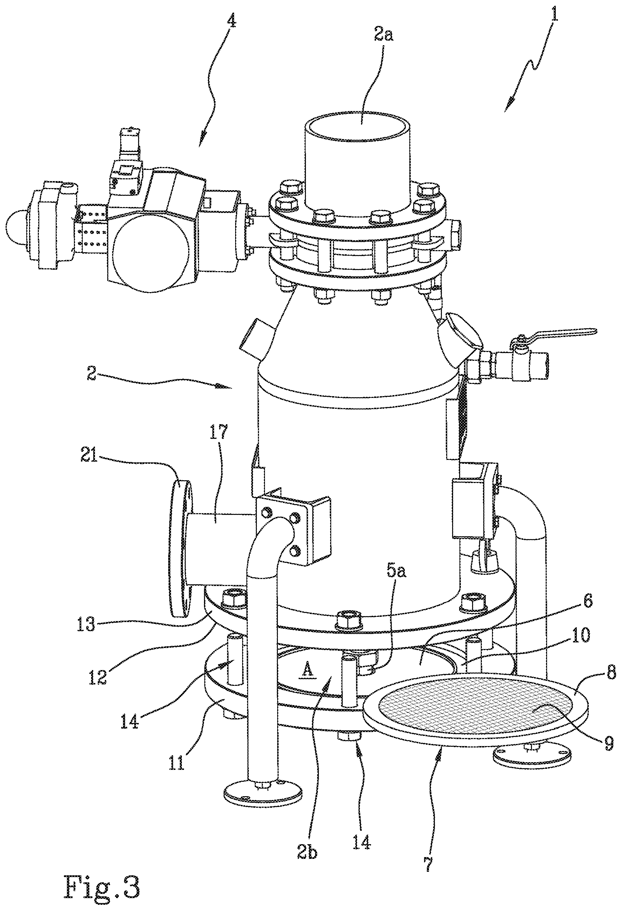

Advantageously, reversible coupling means 14 of the circular flange 11 with respect to the contrast flange 13 are also provided to define said operation and replacement conditions. The reversible coupling means 14 preferably consist of a series of tightening screws arranged throughout the circumferential extension of the flanges 11, 13. The tightening screws allow the manual intervention on the circular flange 11, by pulling it away from the contrast flange 13 to provide for the possible removal of the filter 7 and the replacement with a new filter 7. In this situation, as illustrated in figure 3, the filter is inserted between the two flanges 11, 13 along a direction transverse to the longitudinal development axis of the containment body 2. Once the frame 8 of the filter 7 has been positioned in the respective recess 10, the flange 11 is tightened by acting on the aforementioned coupling means 14.

The apparatus 1 further comprises an ejection outlet 15 of the material flow for transferring the material itself along the production line only partially illustrated in the form of a duct 20 (figure 4).

The ejection outlet 15 presents a passage duct 16 which may be removably associated with the outlet 15 itself to put the containment compartment 3 in fluid communication with the production line 20.

In particular, the containment body 2 has a tubular portion 17 projecting from the body 2 itself and defining the ejection outlet 15. The tubular portion 17 is suitable for internally accommodating the passage duct 16.

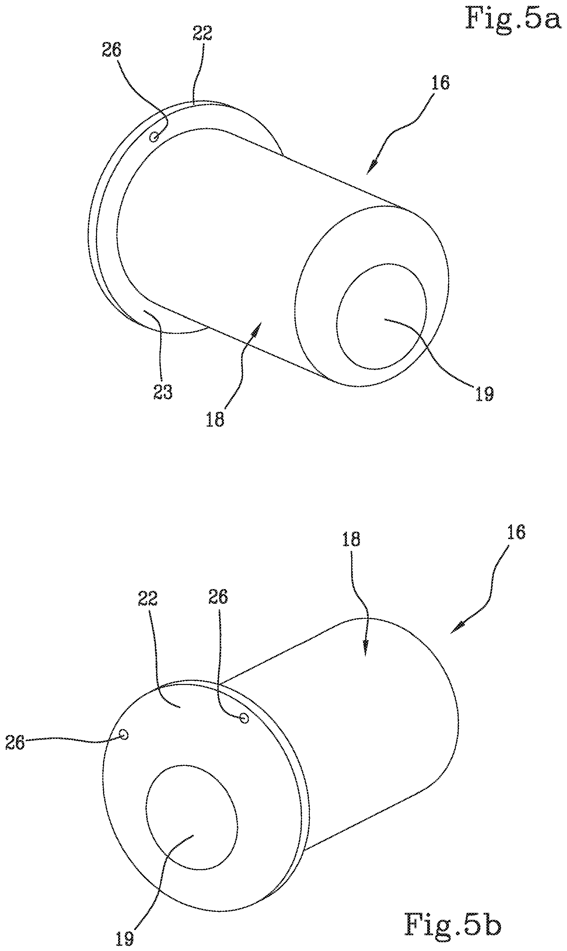

With reference to figures 2, 5a and 5b, the passage duct 16 comprises at least one cylindrical body 18 having an inner recess 19 for the passage of the material flow.

Advantageously, the cylindrical body 18 is made of a material which is resistant to abrasion wear, preferably of ceramic material or steel. According to the present invention, the passage duct 16 comprises a plurality of cylindrical bodies 18, each having an inner recess 19 with a predefined size.

The cylindrical bodies 18 are interchangeable within the tubular portion 17 according to the sizes of the inner recess 19 which is selected as a function of the various production needs.

In other words, according to the sizes of the duct 20 which can vary as a function of the type of production line and depending on the nature of the powder material to be processed and transported, the cylindrical body 18 having the sizes of the suitable recess 19 is adopted.

It should be specified that in the accompanying figures there is illustrated only one cylindrical body 18 having a predetermined size of the recess 19. However, the number of bodies 18 having respective sizes of the recess 19 can be any plurality, according to the various implementation needs.

The tubular portion 17 comprises a first opening 17a formed at the compartment 3 to allow the passage of the flow from the compartment 3 to the passage duct 16, and a second opening 17b, opposite to the first 17a, distal from the compartment 3.

In this situation, the cylindrical body 18 develops from the first opening 17a to the second opening 17b.

The second opening 17b has in turn a coupling flange 21 to the production line and, in particular, to a flange 20a of the duct 20.

Accordingly, the apparatus 1 is associated with the production line by coupling the flange 21 of the second opening 17b to the flange 20a of the duct 20 (figure 4).

With particular reference to figures 5a and 5b, it should be noted that the cylindrical body 18 has a circular end portion 22, coaxial to the longitudinal extension of the body 18 itself and placed at the second opening 17b. The end portion 22 has a circular configuration and has a cross-sectional width greater than the remaining cylindrical body 18.

The end portion 22 also defines an interlocking undercut 23 which may be coupled to an annular surface 24 defined in the coupling flange 21 of the tubular portion 17 (figure 2).

In this situation, the cylindrical body may be inserted within the tubular portion 17 through the second opening 17b. Likewise, in order to provide for a quick replacement, the body 18 may be removed from the tubular portion 17 by extracting it therefrom, still through the second opening 17b. Preferably, there are also provided reversible coupling means 25 interposed between the undercut 23 and the annular surface 24 for switching the cylindrical body 18 between an operation condition, in which it is associated inside the tubular portion 17 (figure 1), and a replacement condition of the cylindrical body 18 as a function of the sizes of the recess 19 (figure 2).

The reversible coupling means 25 advantageously consist of a plurality of tightening screws 25a passing across through holes 26 formed in the end portion 22 and which may be coupled in holes formed on the annular surface 24. Provision is thereby made to allow the easy and quick manual releasing and constraining of the cylindrical body 18 within the tubular portion 17.

It should also be noted that in the operation condition in which the cylindrical body 18 is associated within the tubular portion 17 (figure 1), the end portion 22 defines a coupling surface 27 opposite to the undercut 23 and coplanar with respect to an annular surface of the coupling flange 21.

In this condition, illustrated better in the sectional view in figure 4, the coupling surface 27 is attached to the duct 20 of the production line to allow the passage of the material flow.

Advantageously, the present invention overcomes the drawbacks of the prior art and provides significant advantages.

Firstly, the apparatus 1 turns out to be very versatile as it can adapt to the various production needs.

As a result, thanks to the possibility of removing and replacing easily and quickly the cylindrical body 18, it is possible to install the apparatus 1 making it compatible with any type of production line regardless of the sizes of the flow inlet ducts.

Moreover, the material the cylindrical body 18 is made of ensures resistance to abrasion due to the strong turbulences generated at the ejection outlet 15.

However, it should be considered that the possibility of quickly removing and replacing the cylindrical body 18 facilitates maintenance operations carried out in order to replace the parts subject to wear.

Likewise, the present invention allows to remove and replace easily and quickly the filter 17, too, completely eliminating installation mistakes, if any. This advantage is due to the single-body structure of the mesh 9 vulcanized with the frame 8 and which therefore has a semi-rigid structure which can be easily managed and inserted into the compartment 3.

It should also be noted that the presence of the annular recess 10 for housing the frame 8 ensures the proper positioning of the filter 7 thus eliminating any human installation mistake.

## Claims

1. Apparatus for the fluidification and transport of granular materials or powders, comprising:
- a containment body (2) for granular or powder material internally defining a containment compartment (3);
- an inlet (2b) for supplying a pressurized gas into said containment compartment (3) for fluidifying the material and generating a material flow;
- a filter (7) arranged in said inlet (2b) for supplying gas to allow the passage of the gas itself within the compartment (3) and prevent the material from leaking out from said inlet (2b); and
- an ejection outlet (15) for the material flow to transfer the material itself along a production line (20), said outlet (15) having a passage duct (16) that can be removably associable with the outlet (15) itself to put the containment compartment (3) in fluid communication with said production line (20);
said filter (7) comprises at least one support frame (8) made of rubber and removably associable with said inlet (2b), said frame (8) having annular shape internally defining a seat for housing a mesh element (9) made in the form of a cloth for holding the material, said mesh element (9) and said frame (8) are integrally made by vulcanization treatment;
said inlet (2b) comprising an area (A) for housing said filter (7) having a pipe (5a) for feeding the pressurized gas; said inlet (2b) also having an annular recess (10) for positioning the frame (8) arranged around said pipe (5a);
**characterized in that** said annular recess (10) is defined by at least one groove formed in a respective circular flange (11) switchable between an operation condition, wherein it is attached to the containment body (2) to keep the frame (8) in the annular recess (10), and a replacement condition of the filter (7), wherein the flange is pulled away from the containment body (2) to allow the removal/positioning of the filter (7) itself; and **in that** said passage duct (16) comprises a plurality of cylindrical bodies (18), each having an inner recess (19) for the passage of the material flow with a predefined size; said cylindrical bodies (18) being interchangeable within a tubular portion (17) defining said ejection outlet (15) according to the sizes of said inner recess (19).

2. Apparatus according to the preceding claim, **characterized in that** it comprises reversible coupling means (14) of the flange (11) to the containment body (2) to define said operation and replacement conditions.

## Patentansprüche

1. Vorrichtung für die Fluidisierung und den Transport von körnigen Materialien oder Pulvern, umfassend:
- einen Behälterkörper (2) für körnige Materialien oder Pulver, der im Inneren einen Behälterraum (3) begrenzt;
- einen Einlass (2b) zum Zuführen eines unter Druck stehenden Gases in den Behälterraum (3), um das Material zu fluidisieren und einen Materialfluss zu erzeugen;
- einen Filter (7), der in dem Einlass (2b) für die Zufuhr von Gas angeordnet ist, um den Durchlass des Gases innerhalb des Raums (3) zu ermöglichen und zu verhindern, dass das Material aus dem Einlass (2b) ausläuft; und
- einen Ausstoßauslass (15) für den Materialfluss, um das Material entlang einer Produktionslinie (20) zu transportieren, wobei der Auslass (15) einen Durchlasskanal (16) aufweist, der abnehmbar mit dem Auslass (15) verbunden werden kann, um den Behälterraum (3) in Fluidverbindung mit der Produktionslinie (20) zu bringen;
der Filter (7) umfasst mindestens einen Stützrahmen (8), der aus Gummi hergestellt ist und abnehmbar mit dem Einlass (2b) verbunden werden kann, wobei der Rahmen (8) eine ringförmige Form aufweist, die im Inneren einen Sitz zur Aufnahme eines Maschenelements (9) definiert, das in Form eines Gewebes zum Halten des Materials hergestellt ist, wobei das Maschenelement (9) und der Rahmen (8) durch eine Vulkanisationsbehandlung integral hergestellt sind;
wobei der Einlass (2b) einen Bereich (A) zur Aufnahme des Filters (7) umfasst, der ein Rohr (5a) zur Zuführung des unter Druck stehenden Gases aufweist; wobei der Einlass (2b) auch eine ringförmige Aussparung (10) zur Positionierung des um das Rohr (5a) angeordneten Rahmens (8) aufweist;
**dadurch gekennzeichnet, dass** die ringförmige Aussparung (10) durch mindestens eine Nut definiert ist, die in einem entsprechenden kreisförmigen Flansch (11) ausgebildet ist, der zwischen einem Betriebszustand, in dem er an dem Behälterkörper (2) befestigt ist, um den Rahmen (8) in der ringförmigen Aussparung (10) zu halten, und einem Austauschzustand des Filters (7) umschaltbar ist, in dem der Flansch von dem Behälterkörper (2) weggezogen wird, um das Entfernen/Positionieren des Filters (7) zu ermöglichen; und dass der Durchlasskanal (16) eine Vielzahl von zylindrischen Körpern (18) umfasst, von denen jeder eine innere Aussparung (19) für den Durchlass des Materialflusses mit einer vordefinierten Größe aufweist; wobei die zylindrischen Körper (18) innerhalb eines rohrförmigen Abschnitts (17), der den Ausstoßauslass (15) definiert, entsprechend den Größen der inneren Aussparung (19) austauschbar sind.

2. Vorrichtung nach dem vorstehenden Anspruch, **dadurch gekennzeichnet, dass** sie umkehrbare Kopplungsmittel (14) des Flansches (11) an den Behälterkörper (2) umfasst, um die Betriebs- und Austauschzustände zu definieren.

## Revendications

1. Appareil pour la fluidification et le transport de matériaux granulaires ou en poudres, comprenant :
- un corps de confinement (2) pour les matériaux granulaires ou en poudre définissant intérieurement un compartiment de confinement (3) ;
- une entrée (2b) pour fournir un gaz sous pression dans ledit compartiment de confinement (3) afin de fluidifier le matériau et de générer un flux de matériau ;
- un filtre (7) disposé dans ladite entrée (2b) pour l'alimentation en gaz afin de permettre le passage du gaz lui-même à l'intérieur du compartiment (3) et d'empêcher le matériau de s'échapper de ladite entrée (2b) ; et
- une sortie d'éjection (15) pour le flux de matériau afin de transférer le matériau lui-même le long d'une ligne de production (20), ladite sortie (15) ayant un conduit de passage (16) qui peut être associé de manière amovible à la sortie (15) elle-même pour mettre le compartiment de confinement (3) en communication fluidique avec ladite ligne de production (20) ;
ledit filtre (7) comprend au moins un cadre de support (8) réalisé en caoutchouc et associable de manière amovible à ladite entrée (2b), ledit cadre (8) ayant une forme annulaire définissant intérieurement un siège pour loger un élément de maillage (9) réalisé sous la forme d'un tissu pour retenir le matériau, ledit élément de maillage (9) et ledit cadre (8) sont réalisés intégralement par traitement de vulcanisation ;
ladite entrée (2b) comprenant une zone (A) pour loger ledit filtre (7) ayant un tuyau (5a) pour alimenter le gaz sous pression ; ladite entrée (2b) a également un évidement annulaire (10) pour positionner le cadre (8) disposé autour dudit tuyau (5a) ;
**caractérisé en ce que** ledit évidement annulaire (10) est défini par au moins une rainure formée dans une bride circulaire respective (11) commutable entre une condition de fonctionnement, dans lequel elle est fixée au corps de confinement (2) pour maintenir le cadre (8) dans l'évidement annulaire (10), et une condition de remplacement du filtre (7), dans lequel la bride est retirée du corps de confinement (2) pour permettre le retrait/le positionnement du filtre (7) lui-même ; et **en ce que** ledit conduit de passage (16) comprend une pluralité de corps cylindriques (18), chacun ayant un évidement intérieur (19) pour le passage du flux de matériau avec une taille prédéfinie ; lesdits corps cylindriques (18) sont interchangeables à l'intérieur d'une partie tubulaire (17) définissant ladite sortie d'éjection (15) en fonction des tailles dudit évidement intérieur (19).

2. Appareil selon la revendication précédente, **caractérisé en ce qu'**il comprend des moyens de couplage réversible (14) de la bride (11) au corps de confinement (2) pour définir lesdites conditions de fonctionnement et de remplacement.
